# EUROPEAN PATENT APPLICATION

(11) **EP 2 502 948 A1**
(43) Date of publication of application: **26.09.2012**
(21) Application number: 10831499.8
(22) Date of filing: 10.11.2010
(51) Int. Cl.: C08G 64/26

(54) **METHOD FOR PRODUCING POLYCARBONATE**

(30) Priority: 17.11.2009 JP 2009261722
(71) Applicant: Asahi Glass Company, Limited, Tokyo 100-8405 (JP)
(72) Inventor: NOMURA Jumpei, Tokyo 100-8405 (JP); OKAMOTO Hidekazu, Tokyo 100-8405 (JP); OKAZOE Takashi, Tokyo 100-8405 (JP)
(74) Representative: Ehlich, Hendrik
(86) International application number: PCT/JP2010/070054
(87) International publication number: WO 2011/062104

(57) **Abstract**

The present invention relates to a method for producing a polycarbonate, containing melt-polycondensing a diol component containing a compound represented by the following formula (1) with a fluorine-containing carbonate: 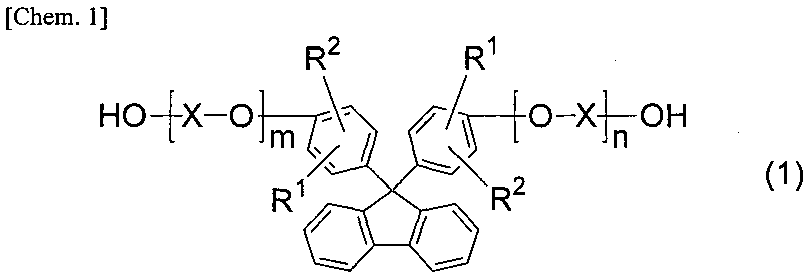 here, R¹ and R² are each independently hydrogen atom, C₁₋₁₀ alkyl group, C₆₋₁₀ cycloalkyl group, or C₆₋₁₀ aryl group, and two of R¹'s and two of R²'s may mutually be the same or different; X is C₁₋₆ alkylene group, C₆₋₁₀ cycloalkylene group, or C₆₋₁₀ arylene group, and a plurality of X's may be the same or different; and m and n are each independently an integer of from 1 to 5.

## Description

### TECHNICAL FIELD

The present invention relates to a method for producing a polycarbonate.

### BACKGROUND ART

Polycarbonate has excellent transparency, heat resistance, mechanical characteristics and the like, and is therefore utilized in various optical materials. In optical materials used in optical films, optical disks, optical prisms, pickup lenses and the like, it is known that where birefringence is large, an imaging point of light transmitted through inside of a material is blurry, and therefore various problems such as read error of information occur. For this reason, a polycarbonate having small birefringence is demanded.

For example, the following polycarbonates are proposed as polycarbonates having small birefringence.
(1) Wholly aromatic polycarbonates using bisphenols having a fluorene structure which has large polarizability, in a side chain direction (Patent Documents 1 and 2).
(2) Homopolycarbonates of ether diols having, for the purpose of decreasing photoelastic constant, a fluorene structure which has large polarizability in a side chain direction and a phenol skeleton in a linear chain direction, or copolymers of those with bisphenols (Patent Documents 3 and 4).
(3) Copolymers of bisphenols having a fluorene structure which has large polarizability in a side chain direction with aliphatic cyclic diols having a specific structure (Patent Document 5).
(4) Copolymers of ether diols having a fluorene structure and having a phenol skeleton in a linear chain direction with aliphatic cyclic diols having a specific structure, as a polycarbonate generating less birefringence even when extrusion molding, injection molding and stretching processing are carried out (Patent Document 6).

These polycarbonates of (1) to (4) have high transparency and low photoelastic constant, and are therefore expected as optical materials.
By the way, the polycarbonates of (1) to (4) are generally produced by melt-polycondensation between diphenyl carbonate and a diol monomer. However, in the case of using diphenyl carbonate, a boiling point of phenol extracted from the system with the progress of an ester exchange reaction is high. This poses the restriction that a polycondensation temperature must be set high. As a result, a coloring material due to thermal decomposition of a diol monomer may be formed, and the coloring material may adversely affect hue of a polycarbonate. In view of this, further improvement of hue is required in order to widely use the polycarbonate as optical materials.

As a method for producing a polycarbonate at low polycondensation temperature by decreasing a boiling point of an alcohol extracted from the system with the progress of an ester exchange reaction, a polycondensation method using bis-(β-fluoroalkyl) carbonate and a dihydric phenol is investigated (Patent Document 7).
However, this method is only for the production of a carbonate polymer of a dihydric phenol, and the carbonate polymer of a dihydric phenol is insufficient as an optical material requiring high transparency and small birefringence.

### CITATION LIST

### PATENT DOCUMENT

Patent Document 1: JP-A 6-25398
Patent Document 2: JP-A 7-109342
Patent Document 3: JP-A 10-101787
Patent Document 4: JP-A 10-101786
Patent Document 5: JP-A 2000-169573
Patent Document 6: JP-A 2005-146140
Patent Document 7: JP-A 55-102626 (1980)

### SUMMARRY OF THE INVENTION

### PROBLEMS THAT THE INVENTION IS TO SOLVE

The present invention provides a method by which a polycarbonate having excellent hue and high refractive index with a simple process under a low temperature.

### MEANS FOR SOLVING THE PROBLEMS

The method for producing a polycarbonate according to the present invention, comprising melt-polycondensing a diol component containing a compound represented by the following formula (1) with a fluorine-containing carbonate:

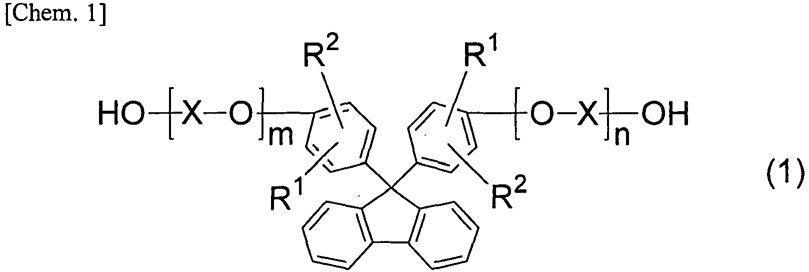

Here, R¹ and R² are each independently hydrogen atom, C₁₋₁₀ alkyl group, C₆₋₁₀ cycloalkyl group, or C₆₋₁₀ aryl group, and two of R¹'s and two of R²'s may mutually be the same or different;
X is C₁₋₆ alkylene group, C₆₋₁₀ cycloalkylene group, or C₆₋₁₀ arylene group, and a plurality of X's may be the same or different; and
m and n are each independently an integer of from 1 to 5.

The fluorine-containing carbonate preferably contains at least one fluorine-containing carbonate selected from the group consisting of a compound represented by the following formula (4), a compound represented by the following formula (5), a compound represented by the following formula (6), a compound represented by the following formula (7), and a compound represented by the following formula (8):

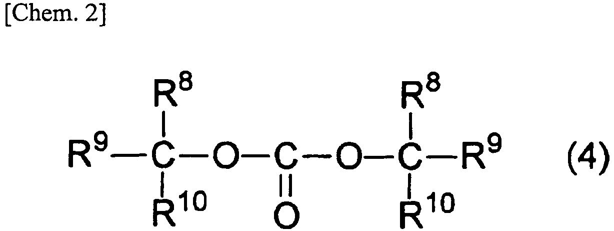

Here, R⁸ is fluorine atom or a group represented by CA¹B¹R¹¹, and two of R⁸'s may be the same or different;
R⁹ is hydrogen atom, fluorine atom or a group represented by CA²B²R¹², and two of R⁹'s may be the same or different;
R¹⁰ is hydrogen atom, fluorine atom or a group represented by CA³B³R¹³, and two of R¹⁰'s may be the same or different;
A¹ to A³ are each independently hydrogen atom, fluorine atom or R^{f}, and in the case that plural A¹'s to A³'s are present, respectively, the respective A¹'s to A³'s may be the same or different;
B¹ to B³ are each independently hydrogen atom, fluorine atom or R^{f}, and in the case that plural B¹'s to B³'s are present, respectively, the respective B¹'s to B³'s may be the same or different;
R¹¹ is fluorine atom, R^{f} or OR^{f};
R¹² and R¹³ are each independently hydrogen atom, fluorine atom, R^{f}, OR^{f}, or C₁₋₆ alkyl group (which may contain etheric oxygen); and
R^{f} is C₁₋₄ fluoroalkyl group (which may contain etheric oxygen) or C₆₋₁₀ fluoroarylene group (which may contain etheric oxygen), and in the case that plural R^{f}'s are present, the plural R^{f}'s may be mutually the same or different:

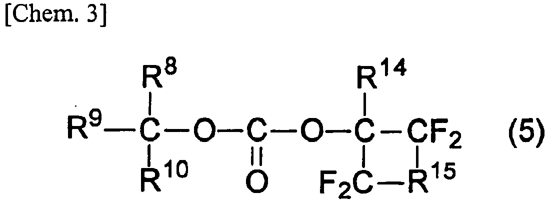

Here, R⁸ is fluorine atom or a group represented by CA¹B¹R¹¹;
R⁹ is hydrogen atom, fluorine atom or a group represented by CA²B²R¹²;
R¹⁰ is hydrogen atom, fluorine atom or a group represented by CA³B³R¹³;
R¹⁴ is hydrogen atom or fluorine atom;
R¹⁵ is C₁₋₅ perfluoroalkylene group (which may contain etheric oxygen);
A¹ to A³ are each independently hydrogen atom, fluorine atom or Rf;
B¹ to B³ are each independently hydrogen atom, fluorine atom or Rf;
R¹¹ is fluorine atom, R^{f} or OR^{f};
R¹² and R¹³ are each independently hydrogen atom, fluorine atom, R^{f}, OR^{f} or C₁₋₆ alkyl group (which may contain etheric oxygen); and
R^{f} is C₁₋₄ fluoroalkyl group (which may contain etheric oxygen) or C₆₋₁₀ fluoroarylene group (which may contain etheric oxygen), and in the case that plural R^{f}'s are present, the plural R^{f}'s may mutually be the same or different:

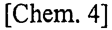

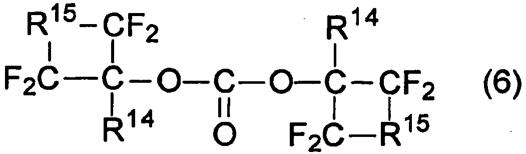

Here, R¹⁴ is hydrogen atom or fluorine atom, and two of R¹⁴'s may be the same or different;
R¹⁵ is C₁₋₅ perfluoroalkylene group (which may contain etheric oxygen), and two of R¹⁵'s may be the same or different:

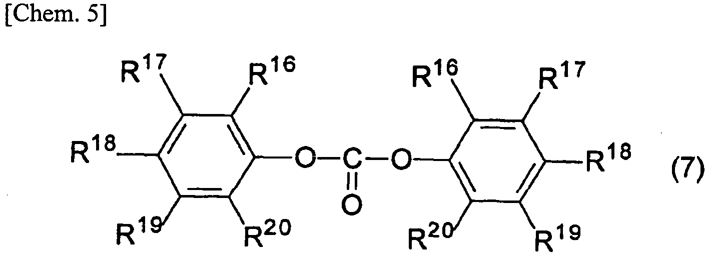

Here, R¹⁶ to R²⁰ are each independently hydrogen atom, fluorine atom, C₁₋₆ alkyl group (which may contain etheric oxygen), or C₁₋₆ fluoroalkyl group (which may contain etheric oxygen), and two of R¹⁶'s, two of R¹⁷'s, two of R¹⁸'s, two of R¹⁹'s, and two of R²⁰'s may mutually be the same or different;
in each benzene ring, at least one of R¹⁶ to R²⁰ has fluorine atom; and
the alkyl group and the fluoroalkyl group may be a linear structure or may be a branched structure:

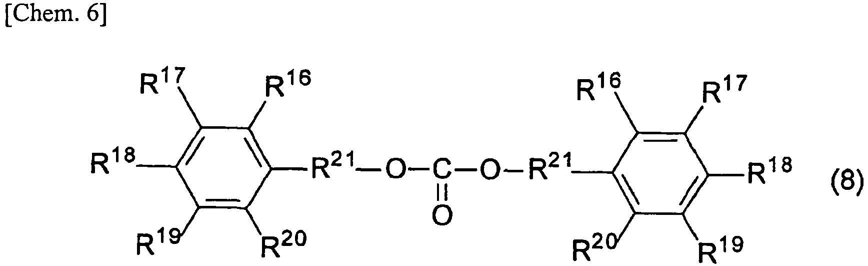

Here, R¹⁶ to R²⁰ are each independently hydrogen atom, fluorine atom, C₁₋₆ alkyl group (which may contain etheric oxygen), or C₁₋₆ fluoroalkyl group (which may contain etheric oxygen), and two of R¹⁶'s, two of R¹⁷'s, two of R¹⁸'s, two of R¹⁹'s, and two of R²⁰'s may mutually be the same or different;
R²¹ is C₁₋₆ alkylene group (which may contain etheric oxygen) or C₁₋₆ fluoroalkylene group (which may contain etheric oxygen), and two of R²¹'s may be the same or different; and
the compound has at least one fluorine atom in the molecule.

In the method for producing a polycarbonate according to the present invention, it is preferred that the melt-polycondensation of the diol component with the fluorine-containing carbonate is carried out in the presence of a catalyst.
The catalyst is preferably a basic catalyst or an ion exchange resin having a structure of the basic catalyst.
The catalyst is preferably at least one selected from the group consisting of a simple substance of metal, a metal oxide, a metal hydroxide, a metal hydride, a metal acetate, a metal carbonate, a metal phosphate, a metal halide, an amidated compound of metal, a metal alcoholate, and a metal phenolate.

The fluorine-containing carbonate is preferably obtained by a reaction that uses at least one fluorine-containing alcohol selected from the group consisting of a compound represented by the following formula (9) and a compound represented by the following formula (10), as a starting material:

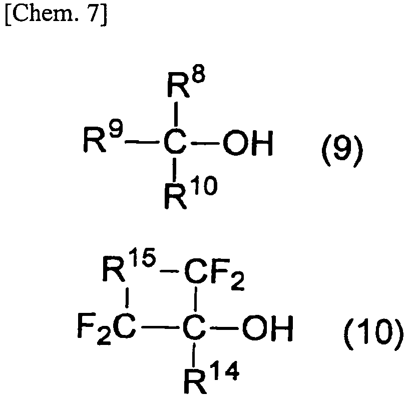

Here, R⁸ is fluorine atom or a group represented by CA¹B¹R¹¹;
R⁹ is hydrogen atom, fluorine atom or a group represented by CA²B²R¹²;
R¹⁰ is hydrogen atom, fluorine atom or a group represented by CA³B³R¹³;
R¹⁴ is hydrogen atom or fluorine atom;
R¹⁵ is C₁₋₅ perfluoroalkylene group (which may contain etheric oxygen);
A¹ to A³ are each independently hydrogen atom, fluorine atom or R^{f};
B¹ to B³ are each independently hydrogen atom, fluorine atom or R^{f};
R¹¹ is fluorine atom, R^{f} or OR^{f};
R¹² and R¹³ are each independently hydrogen atom, fluorine atom, R^{f}, OR^{f} or C₁₋₆ alkyl group (which may contain etheric oxygen); and
R^{f} is C₁₋₄ fluoroalkyl group (which may contain etheric oxygen) or C₆₋₁₀ fluoroarylene group (which may contain etheric oxygen), and in the case that plural R^{f}'s are present in one molecule, the plural R^{f}'s may mutually be the same or different.

The carbon number of the fluorine-containing alcohol is preferably from 2 to 10.
The pKa of the fluorine-containing alcohol is preferably less than 15, and more preferably less than 10.
The fluorine-containing alcohol preferably contains at least one selected from the group consisting of 2,2,3,3-tetrafluoropropanol, 1,1,1,3,3,3-hexafluoro-2- propanol, perfluoro(t-butyl)alcohol, and 2,2,3,3,4,4,5,5,6,6-decafluorocyclohexanol.

### ADVANTAGEOUS EFFECTS OF INVENTION

According to the method for producing a polycarbonate of the present invention, a polycarbonate having excellent hue and high refractive index can be produced with a simple process under a low temperature.

### MODE FOR CARRYING OUT THE INVENTION

In the present description, a compound represented by the formula (1) is referred to as a "compound (1)". Compounds represented by other formulae are also referred in the same manner.

### <Method for producing polycarbonate>

The method for producing a polycarbonate of the present invention is a method for obtaining a polycarbonate by melt-polycondensing a diol component containing a compound (1) with a fluorine-containing carbonate, if necessary, in the presence of a catalyst.

### (Diol component)

The diol component is a component containing the compound (1) as an essential component, and if necessary, containing a compound (2), a compound (3) and other diols.

The compound (1) is a compound represented by the following formula (1).

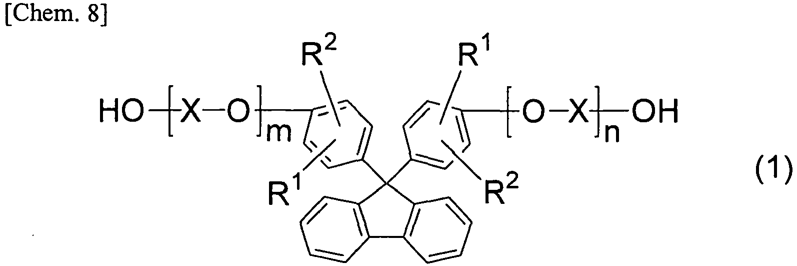

R¹ and R² are each independently hydrogen atom, C₁₋₁₀ alkyl group, C₆₋₁₀ cycloalkyl group, or C₆₋₁₀ aryl group. The alkyl group may be a linear structure or may be a branched structure. The cycloalkyl group and the aryl group may have an alkyl group (preferably C₁₋₄ alkyl group) as a substituent. Two of R¹'s and two of R²'s may mutually be the same or different.
X is C₁₋₆ alkylene group, C₆₋₁₀ cycloalkylene group, or C₆₋₁₀ arylene group. The alkylene group may be a linear structure or may be a branched structure. The cycloalkylene group and the arylene group may have an alkyl group (preferably C₁₋₄ alkyl group) as a substituent. A plurality of X's may be the same or different.
m and n are each independently an integer of from 1 to 5.

Specific examples of the compound (1) include the following compounds:
9,9-bis-(4-(2-hydroxyethoxy)phenyl)fluorene,
9,9-bis-(4-(2-hydroxyethoxy)-3-methylphenyl)fluorene,
9,9-bis-(4-(2-hydroxyethoxy)-3,5-dimethylphenyl)fluorene,
9,9-bis-(4-(2-hydroxyethoxy)-3-t-butylphenyl)fluorene,
9,9-bis-(4-(2-hydroxyethoxy)-3-isopropylphenyl)fluorene,
9,9-bis-(4-(2-hydroxyethoxy)-3-cyclohexylphenyl)fluorene, and
9,9-bis-(4-(2-hydroxyethoxy)-3-phenylphenyl)fluorene.

As the compound (1), the following compounds are preferred from the standpoints that it is inexpensive and procurement of raw materials is easy:
9,9-bis-(4-(2-hydroxyethoxy)phenyl)fluorene,
9,9-bis-(4-(2-hydroxyethoxy)-3-methylphenyl)fluorene, and
9,9-bis-(4-(2-hydroxyethoxy)-3,5-dimethylphenyl)fluorene.

The compound (2) is a compound represented by the following formula (2).

[Chem. 9] HO—CH₂—Y—CH₂—OH (2)

Y is C₁₋₁₀ alkylene group or C₄₋₂₀ cycloalkylene group. The alkylene group may be a linear structure or may be a branched structure. The cycloalkylene group may have an alkyl group (preferably C₁₋₁₀ alkyl group) as a substituent.

Specific examples of the compound (2) include the following compounds:
tricyclo[5. 2. 1. 0^{2, 6}]decanedimethanol,
4,10-dimethyltricyclo[5. 2. 1. 0^{2, 6}]decanedimethanol,
4,4,10,10-tetramethyltricyclo[5. 2. 1. 0^{2, 6}]decanedimethanol,
1,2,3,4,5,6,7,8,9,10-decamethyltricyclo[5. 2. 1. 0^{2, 6}]decanedimethanol,
cyclohexane-1,4-dimethanol,
decalin-2,6-dimethanol,
2,3-norbornanedimethanol,
2,5-norboranedimethanol,
pentacyclo[6. 5. 1. 1^{3, 6}. 0^{2, 7}. 0^{9, 13}]pentadecanedimethanol,
pentacyclo[9. 2. 1. 1^{4,7}. 0^{2,10}. 0^{3,8}]pentadecanedimethanol,
cyclopentane-1,3-dimethanol,
1,4-butanediol,
1,5-pentanediol,
1,6-hexanediol, and
1,9-nonanediol.

As the compound (2), the following compounds are preferred from the standpoint that the effect of decreasing melt viscosity of a polycarbonate is large, thereby improving molding processability:
tricyclo[5. 2. 1. 0^{2, 6}]decanedimethanol,
4,10-dimethyltricyclo[5. 2. 1. 0^{2, 6}]decanedimethanol,
4,4,10,10-tetramethyltricyclo[5. 2. 1. 0^{2, 6}]decanedimethanol,
cyclohexane-1,4-dimethanol,
2,3-norbornanedimethanol,
2,5-norbornanedimethanol,
1,4-butanediol, and
1,5-pentanediol.

The compound (3) is a compound represented by the following formula (3).

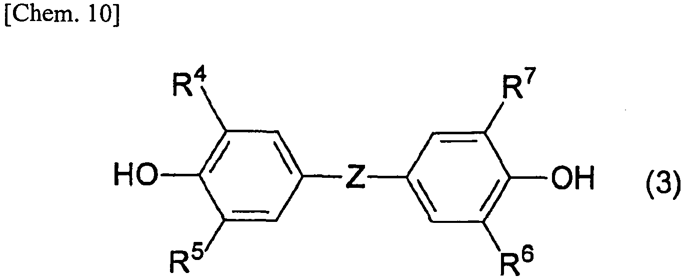

Z is C₁₋₆ alkylene group, C₁₋₆ fluoroalkylene group, C₂₋₆ alkylidene group, C₆₋₁₀ cycloalkylene group, C₆₋₁₀ cycloalkylidene group, ketone group, sulfinyl group, sulfonyl group, oxygen atom, or sulfur atom. The alkylene group, the fluoroalkylene group and the alkylidene group may be a linear structure or may be a branched structure. The cycloalkylene group and the cycloalkylidene group may have an alkyl group (preferably C₁₋₄ alkyl group) as a substituent.
R⁴ to R⁷ are each independently hydrogen atom, methyl group, ethyl group, methoxy group, chlorine atom or bromine atom.

Specific examples of the compound (3) include the following compounds:
hydroquinone,
resorcinol,
dihydroxydiphenyl,
bis-(hydroxyphenyl)alkane,
bis-(hydroxyphenyl)cycloalkane,
bis-(hydroxyphenyl)sulfide,
bis-(hydroxyphenyl)ether,
bis-(hydroxyphenyl)ketone,
bis-(hydroxyphenyl)sulfoxide,
bis-(hydroxyphenyl)sulfone,
α,α'-bis-(hydroxyphenyl)diisopropylbenzene,
alkylated derivatives of those, and
halogenated derivatives of those.

As the compound (3), the following compounds are preferred from the standpoints of suppliability of raw materials and thermal stability:
2,2,-bis-(4-hydroxyphenyl)propane [bisphenol A],
2,2,-bis-(4-hydroxyphenyl)hexafluoropropane [bisphenol AF],
2,2-bis-(3-methyl-4-hydroxyphenyl)propane,
2,2-bis-(3,5-dimethyl-4-hydroxyphenyl)propane,
2,2-bis-(3,5-dichloro-4-hydroxyphenyl)propane,
2,2-bis-(3,5-dibromo-4-hydroxyphenyl)propane,
bis-(4-hydroxyphenyl)methane,
bis-(4-hydroxyphenyl)ethane,
1,1-bis-(4-hydroxyphenyl)-1-phenylethane,
2,4-bis-(4, hydroxyphenyl)-2-methylbutane,
1,1-bis-(4-hydroxyphenyl)cyclohexane,
1,1-bis-(4-hydroxyphenyl)-3,3,5-trimethylcyclohexane,
α,α'-bis-(4-hydroxyphenyl)-p-diispropylbenzene,
α,α'-bis-(4-hydroxyphenyl)-α,α,α',α'-tetramethyl-m-xylene,
α,α'-bis-(4-hydroxyphenyl)-α,α,α',α'-tetramethyl-p-xylene,
bis-(4-hydroxyphenyl)sulfide,
bis-(4-hydroxyphenyl)sulfone, and
4,4'-dihydroxydiphenyl.

### (Fluorine-containing carbonate)

As the fluorine-containing carbonate, at least one fluorine-containing carbonate selected from the group consisting of a compound (4), a compound (5), a compound (6), a compound (7), and a compound (8) is preferred from the standpoint of ester exchange reactivity with the diol component.

The compound (4) is a compound represented by the following formula (4).

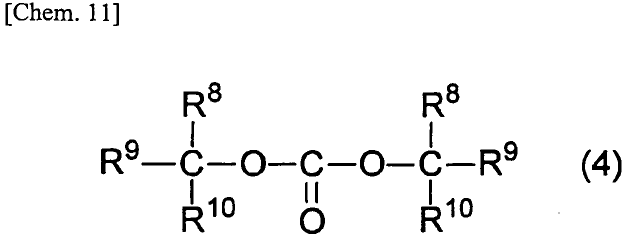

Here, R⁸ is fluorine atom or a group represented by CA¹B¹R¹¹, and two of R⁸'s may be the same or different,
R⁹ is hydrogen atom, fluorine atom or a group represented by CA²B²R¹², and two of R⁹'s may be the same or different,
R¹⁰ is hydrogen atom, fluorine atom or a group represented by CA³B³R¹³, and two of R¹⁰'s may be the same or different,
A¹ to A³ are each independently hydrogen atom, fluorine atom or R^{f}, and in the case that plural A¹'s to A³'s are present, respectively, the respective A¹'s to A³'s may be the same or different,
B¹ to B³ are each independently hydrogen atom, fluorine atom or R^{f}, and in the case that plural B¹'s to B³'s are present, respectively, the respective B¹'s to B³'s may be the same or different,
R¹¹ is fluorine atom, R^{f} or OR^{f},
R¹² and R¹³ are each independently hydrogen atom, fluorine atom, R^{f}, OR^{f} or C₁₋₆ alkyl group (which may contain etheric oxygen), and
R^{f} is C₁₋₄ fluoroalkyl group (which may contain etheric oxygen) or C₆₋₁₀ fluoroarylene group (which may contain etheric oxygen), and in the case that plural R^{f}'s are present, the plural R^{f}'s may be mutually the same or different.
The alkyl group and the fluoroalkyl group may be a linear structure or may be a branched structure. The fluoroarylene group may have an alkyl group or a fluoroalkyl group (preferably C₁₋₄ alkyl group or fluoroalkyl group) as substituents.

The compound (5) is a compound represented by the following formula (5).

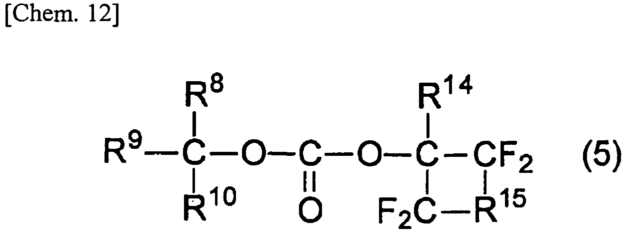

Here, R⁸ is fluorine atom or a group represented by CA¹B¹R¹¹,
R⁹ is hydrogen atom, fluorine atom or a group represented by CA²B²R¹²,
R¹⁰ is hydrogen atom, fluorine atom or a group represented by CA³B³R¹³,
R¹⁴ is hydrogen atom or fluorine atom,
R¹⁵ is C₁₋₅ perfluoroalkylene group (which may contain etheric oxygen),
A¹ to A³ are each independently hydrogen atom, fluorine atom or R^{f},
B¹ to B³ are each independently hydrogen atom, fluorine atom or R^{f},
R¹¹ is fluorine atom, R^{f} or OR^{f},
R¹² and R¹³ are each independently hydrogen atom, fluorine atom, R^{f}, OR^{f} or C₁₋₆ alkyl group (which may contain etheric oxygen), and
R^{f} is C₁₋₄ fluoroalkyl group (which may contain etheric oxygen) or C₆₋₁₀ fluoroarylene group (which may contain etheric oxygen), and in the case that plural R^{f}'s are present, the plural R^{f}'s may mutually be the same or different.
The perfluoroalkylene group, the alkyl group and the fluoroalkyl group may be a linear structure or may be a branched structure. The fluoroarylene group may have an alkyl group or a fluoroalkyl group (preferably C₁₋₄ alkyl group or fluoroalkyl group) as substituents.

The compound (6) is a compound represented by the following formula (6).

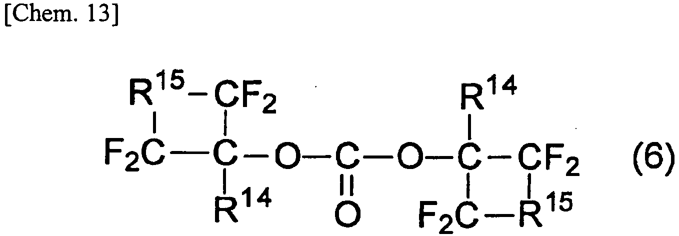

Here, R¹⁴ is hydrogen atom or fluorine atom, and two of R¹⁴'s may be the same or different, and
R¹⁵ is C₁₋₅ perfluoroalkylene group (which may contain etheric oxygen), and two of R¹⁵'s may be the same or different.
The perfluoroalkylene group may be a linear structure or may be a branched structure.

The compound (7) is a compound represented by the following formula (7).

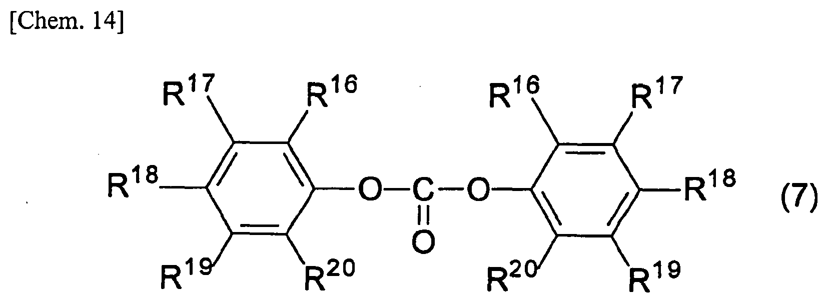

Here, R¹⁶ to R²⁰ are each independently hydrogen atom, fluorine atom, C₁₋₆ alkyl group (which may contain etheric oxygen), or C₁₋₆ fluoroalkyl group (which may contain etheric oxygen), and two of R¹⁶'s, two of R¹⁷'s, two of R¹⁸'s, two of R¹⁹'s, and two of R²⁰'s may mutually be the same or different,
in each benzene ring, at least one of R¹⁶ to R²⁰ has fluorine atom, and
the alkyl group and the fluoroalkyl group may be a linear structure or may be a branched structure.

The compound (8) is a compound represented by the following formula (8).

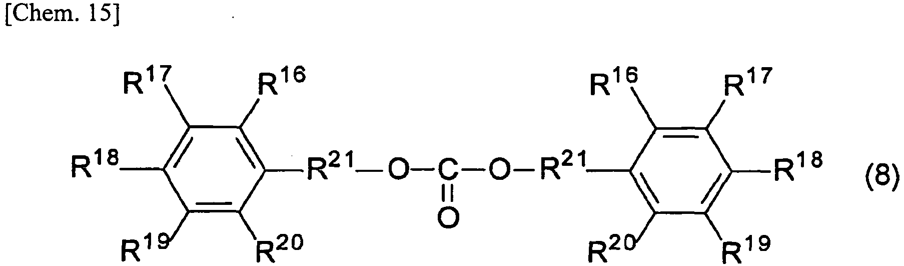

Here, R¹⁶ to R²⁰ are each independently hydrogen atom, fluorine atom, C₁₋₆ alkyl group (which may contain etheric oxygen), or C₁₋₆ fluoroalkyl group (which may contain etheric oxygen), and two of R¹⁶'s, two of R¹⁷'s, two of R¹⁸'s, two of R¹⁹'s, and two of R²⁰'s may mutually be the same or different, and
R²¹ is C₁₋₆ alkylene group (which may contain etheric oxygen) or C₁₋₆ fluoroalkylene group (which may contain etheric oxygen), and two of R²¹'s may be the same or different, and
the compound has at least one fluorine atom in the molecule.
The alkyl group, the fluoroalkyl group, the alkylene group, and the fluoroalkylene group may be a linear structure, or may be a branched structure.

Specific examples of the compounds (4) to (8) include the following compounds:
bis-(2,2,2-trifluoroethyl)carbonate,
bis-(2,2,3,3,3-pentafluoropropyl)carbonate,
bis-(2,2,3,3-tetrafluoropropyl)carbonate,
bis-(1,1,1,3,3,3-hexafluoroisopropyl)carbonate,
bis-(2-fluoropropyl)carbonate,
bis-(2,2,3,4,4,4-hexafluorobutyl)carbonate,
bis-(2,2,3,3,4,4,5,5-octafluoropentyl)carbonate,
bis-(perfluoro(t-butyl))carbonate,
bis-(2,2,3,3,4,4,5,5-octafluorocyclopentyl)carbonate,
bis-(2,2,3,3,4,4,5,5,6,6-decafluorocyclohexyl)carbonate,
bis-(1,1,1-trifluoroisopropyl)carbonate,
bis-(2,2,3,3,4,4,4-heptafluorobutyl)carbonate, and
bis-(3,4,5,6,7-pentafluorophenyl)carbonate.

As the compounds (4) to (8), the following compounds are preferred from the standpoint of the degree of acid dissociation:
bis-(2,2,3,3-tetrafluoropropyl)carbonate,
bis-(1,1,1,3,3,3-hexafluoroisopropyl)carbonate,
bis-(perfluoro(t-butyl))carbonate,
bis-(2,2,3,3,4,4,5,5,6,6-decafluorocyclohexyl)carbonate, and
bis-(3,4,5,6,7-pentafluorophenyl)carbonate.

The fluorine-containing carbonate is preferably used in a proportion of from 0.95 to 1.20 moles per one mole of the total of diol components, and is more preferably used in a proportion of from 0.97 to 1.15 moles.

### (Method for producing fluorine-containing carbonate)

The compounds (4) to (6) can be obtained by a reaction that uses at least one fluorine-containing alcohol selected from the group consisting of a compound (9) and a compound (10), as a starting material.

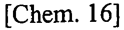

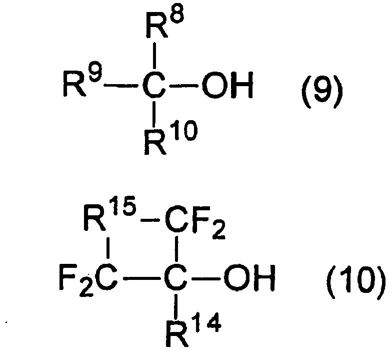

Here, R⁸ is fluorine atom or a group represented by CA¹B¹R¹¹,
R⁹ is hydrogen atom, fluorine atom or a group represented by CA²B²R¹²,
R¹⁰ is hydrogen atom, fluorine atom or a group represented by CA³B³R¹³,
R¹⁴ is hydrogen atom or fluorine atom,
R¹⁵ is C₁₋₅ perfluoroalkylene group (which may contain etheric oxygen),
A¹ to A³ are each independently hydrogen atom, fluorine atom or R^{f},
B¹ to B³ are each independently hydrogen atom, fluorine atom or R^{f},
R¹¹ is fluorine atom, R^{f} or OR^{f},
R¹² and R¹³ are each independently hydrogen atom, fluorine atom, R^{f}, OR^{f} or C₁₋₆ alkyl group (which may contain etheric oxygen), and
R^{f} is C₁₋₄ fluoroalkyl group (which may contain etheric oxygen) or C₆₋₁₀ fluoroarylene group (which may contain etheric oxygen), and in the case that plural R^{f}'s are present, the plural R^{f}'s may mutually be the same or different.
The perfluoroalkylene group, the alkyl group and the fluoroalkyl group may be a linear structure or may be a branched structure. The fluoroarylene group may have an alkyl group or a fluoroalkyl group (preferably C₁₋₄ alkyl group or fluoroalkyl group) as substituents.

The fluorine-containing alcohol is preferably one having the degree of acid dissociation higher than that of the compounds (1) to (3) from the standpoint of increasing ester exchange reaction rate. Therefore, a compound in which a fluoroalkyl group is directly bonded to carbon atom of α-position of hydroxyl group (hereinafter referred to as "α-carbon") is preferred. However, alcohol in which fluorine atom is directly bonded to the α-carbon easily causes decomposition reaction by de-HF reaction, and is therefore not preferred.

The pKa of the fluorine-containing alcohol is used as a measure of the degree of acid dissociation.
The pKa of the fluorine-containing alcohol is preferably lower than that of the compounds (1) to (3), that is, less than 15, and more preferably less than 10.

As the compound (9), the degree of acid dissociation of the fluorine-containing alcohol is increased as the number of fluoroalkyl groups bonded to the α-carbon is increased. From this fact, a compound wherein R⁸ and R⁹ are a group represented by CA¹B¹R¹¹ and CA²B²R¹², that is, a secondary or tertiary fluorine-containing alcohol, is preferred, and a compound wherein R⁸, R⁹ and R¹⁰ are a group represented by CA¹B¹R¹¹, CA²B²R¹² and CA³B³R¹³, respectively, that is, a tertiary fluorine-containing alcohol, is more preferred.

The carbon number of the fluorine-containing alcohol is preferably from 2 to 10. When the carbon number of the fluorine-containing alcohol is 2 or more, stable fluorine-containing alcohol in which fluorine atom is not directly bonded to α-position of hydroxyl group can be selected. When the carbon number of the fluorine-containing alcohol is 10 or less, the fluorine-containing alcohol dissociating at the ester exchange reaction has a boiling point capable of being removed easily under mild conditions in distilling away the fluorine-containing alcohol. Therefore, it is not necessary to apply high temperature at the ester exchange reaction, and high quality polycarbonate can be produced.

Specific examples of the fluorine-containing alcohol include the following compounds:
2,2,2-trifluoroethanol,
2,2,3,3,3-pentafluoropropanol,
2,2,3,3-tetrafluoropropanol,
1,1,1,3,3,3-hexafluoro-2-propanol,
1,1,1-trifluoro-2-propanol,
2-fluoropropanol,
2,2,3,4,4,4-hexafluorobutanol,
2,2,3,3,4,4,4-heptafluorobutanol,
2,2,3,3,4,4,5,5-octafluoropentanol,
perfluoro(t-butyl)alcohol,
2,2,3,3,4,4,5,5-octafluorocyclopentanol,
2,2,3,3,4,4,5,5,6,6-decafluorocyclohexanol, and
3,4,5,6,7-pentafluorophenol.

As the fluorine-containing alcohol, the following compounds are preferred from the standpoint of the degree of acid dissociation:
2,2,3,3-tetrafluoropropanol,
1,1,1,3,3,3-hexafluoro-2-propanol,
perfluoro(t-butyl)alcohol, and
2,2,3,3,4,4,5,5,6,6-decafluorocyclohexanol.

The specific method for obtaining the fluorine-containing carbonate by the reaction that uses the fluorine-containing alcohol as a starting material includes the following methods (a) to (c), and the method (c) is preferred from the standpoints that a toxic compound such as phosgene is not used and the yield is high.
(a) A method for obtaining the fluorine-containing carbonate by reacting phosgene with the fluorine-containing alcohol.
(b) A method for obtaining the fluorine-containing carbonate by ester exchange reaction of a dialkyl carbonate with the fluorine-containing alcohol.
(c) A method for obtaining the fluorine-containing carbonate by reacting a compound (11) and the fluorine-containing alcohol in the presence of a catalyst.

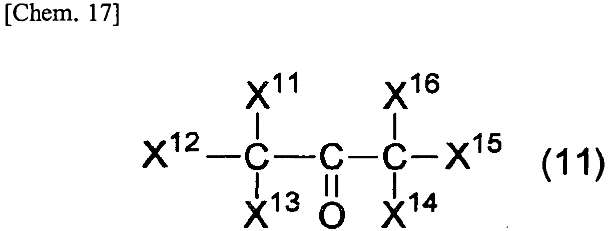

Here, X¹¹ to X¹³ are each independently hydrogen atom or halogen atom, at least one of X¹¹ to X¹³ is halogen atom, X¹⁴ to X¹⁶ are each independently hydrogen atom or halogen atom, and at least one of X¹⁴ to X¹⁶ is halogen atom.
X¹¹ to X¹⁶ are preferably all halogen atoms, are more preferably fluorine atom or chlorine atom, and are most preferably all chlorine atoms from the standpoint that chloroform is obtained as a by-product.

Specific examples of the compound (11) include the following compounds:
hexachloroacetone,
1,1,1,3,3-pentachloroacetone,
1,1,2,2-tetrachloroacetone,
1,1,2-trichloroacetone,
hexafluoroacetone,
1,1,1,3,3-pentafluoroacetone,
1,1,3,3-tetrafluoroacetone,
1,1,2-trifluoroacetone,
1,1,3,3-tetrachloro-1,3-difluoroacetone,
1,1,1-trichloro-3,3,3-trifluoroacetone,
1,3-dichloro-1,1,3,3-tetrafluoroacetone,
1,1,2,2-tetrabromoacetone,
1,1,1,3,3-pentabromoacetone, and
hexabromoacetone.

As the compound (11), hexachloroacetone is preferred from the standpoint that industrially useful chloroform can be produced together in high yield.
Of the compound (11), chloroacetones can easily be produced by a method for chlorinating acetone, described in JP-B 60-52741 and JP-B 61-16255. Furthermore, a partially fluorinated compound can easily be produced by a method for fluorinating chloroacetones by hydrogen fluoride, described in U.S. Patent 6,235,950.

Ratio between mole number of the fluorine-containing alcohol first charged and mole number of the compound (11) first charged (fluorine-containing alcohol/compound (11)) is preferably more than 2.0, more preferably 2.5 or more, and particularly preferably 3.0 or more, from the standpoint of increasing the yield of a fluorine-containing carbonate.

Examples of the catalyst used in the method (c) include alkali metals, alkaline earth metals; alkali metal hydrides, alkaline earth metal hydrides; alkali metal hydroxides, alkaline earth metal hydroxides; phase transfer catalysts; alkali metal halides, alkaline earth metal hydroxides; halides of ammonia; ion-exchange resins; compounds or oxides of at least one metal selected from the group consisting of tin, titanium, aluminum, tungsten, molybdenum, zirconium and zinc; and ester exchange reaction catalysts.

The amount of the catalyst used in the method (c) is variously selected depending on the catalyst, but is preferably from 0.01 to 30 mass% to a substrate, and more preferably from 0.1 to 10 mass%, considering reaction activity and a catalyst removal step after a reaction.

In the method (c), a solvent may be used for the purpose of accelerating a reaction. However, considering volume efficiency of a reactor, and loss of an objective material at the solvent separation step, if possible it is preferred to carry out the reaction in non-solvent.
The reaction temperature in the method (c) is preferably from 40 to 200°C.
The reaction pressure in the method (c) is generally the atmospheric pressure.

### (Catalyst)

In the method for producing a polycarbonate of the present invention, the catalyst used as necessary is preferably a catalyst selected from the group of the following (i) or (ii), from the standpoints of polymerization reactivity and lowering coloration degree:
(i) basic catalysts, or ion-exchange resins having a structure of the basic catalyst; and
(ii) at least one selected from the group consisting of simple substance of metals, metal oxides, metal hydroxides, metal hydrides, metal acetates, metal carbonates, metal phosphates, metal halides, amidated compounds of metals, metal alcoholates, and metal phenolates.

### Group (i):

Examples of the basic catalysts include alkali metal compounds, alkaline earth metal compounds and nitrogen-containing compounds.
Examples of the alkali metal compounds include organic acid salts, inorganic salts, oxides, hydroxides, hydrides, and alkoxides, of alkali metals.
Examples of the alkaline earth metal compounds include organic acid salts, inorganic salts, oxides, hydroxides, hydrides, and alkoxides, of alkaline earth metals.
Examples of the nitrogen-containing compounds include quaternary ammonium hydroxides, their salts, and their amines.
The basic catalysts may be used in one kind alone, or may be used by combining two kinds of more.

Specific examples of the alkali metal compounds include sodium hydroxide, potassium hydroxide, cesium hydroxide, and lithium hydroxide; sodium hydrogen carbonate; sodium carbonate, potassium carbonate, cesium carbonate, and lithium carbonate; sodium acetate, potassium acetate, cesium acetate, and lithium acetate; sodium stearate, potassium stearate, cesium stearate, and lithium stearate; sodium borohydride; sodium borophenylide; sodium benzoate, potassium benzoate, cesium benzoate, and lithium benzoate; disodium hydrogen phosphate, dipotassium hydrogen phosphate, and dilithium hydrogen phosphate; disodium phenylphosphate; disodium salt, dipotassium salt, dicesium salt, and dilithium salt of bisphenol A; and sodium salt, potassium salt, cesium salt, and lithium salt of phenol.

Specific examples of the alkaline earth metal compounds include magnesium hydroxide, potassium hydroxide, strontium hydroxide, and barium hydroxide; magnesium hydrogen carbonate, calcium hydrogen carbonate, strontium hydrogen carbonate, and barium hydrogen carbonate; magnesium carbonate, calcium carbonate, strontium carbonate, and barium carbonate; magnesium acetate, calcium acetate, strontium acetate, and barium acetate; magnesium stearate and calcium stearate; calcium benzoate; and magnesium phenylphosphate.

Specific examples of the nitrogen-containing compounds include quaternary ammonium hydroxides having alkyl group, aryl group or the like, such as tetramethylammonium hydroxide, tetraethylammonium hydroxide, tetrapropylammonium hydroxide, tetrabutylammonium hydroxide and trimethylbenzylammonium hydroxide; tertiary amines such as triethylamine, tripropylamine, tributylamine, tripentylamine, trihexylamine, triheptylamine, trioctylamine, trinonylamine, tridecylamine, triundecylamine, tridodecylamine, trimethylbenzylamine, and triphenylamine; secondary amines such as diethylamine and dibutylamine; primary amines such as propylamine and butylamine; imidazoles such as 2-methylimidazole, 2-phenylimidazole and benzimidazole; and bases or basic salts, such as ammonia, tetramethylammonium borohalide, tetrabutylammonium borohydride, tetrabutylammonium tetraphenylborate, and tetraphenylammonium tetraphenylborate.

Examples of the ion-exchange resins having a structure of a basic catalyst include cation-exchange resins. The commercially available products include DIAION (registered trademark) Series (manufactured by Mitsubishi Chemical Corporation), AMBERLITE (registered trademark) Series (manufactured by Rhom & Haas), and AMBERLYST (registered trademark) Series (manufactured by Rhom & Haas).

### Group (ii):

Examples of simple substance of metals include Li, Na, K, Rb, and Cs that are simple substance of alkali metals, and Ca, Sr, Ba, and Ra that are simple substance of alkaline earth metals.
Examples of the metal oxides include ZnO, PbO, Sb₂O₃, Al₂O₃, and TiO₂.
Examples of the metal hydroxides include aluminum hydroxide, manganese hydroxide, iron (II) hydroxide, copper (II) hydroxide, zinc hydroxide, lanthanum hydroxide and iron (III) hydroxide.
Examples of the metal hydrides include sodium borohydride, lithium hydride, sodium hydride, and lithium aluminum hydride.

Examples of the metal acetates include acetates of Zn, Pb, Sn, Mn, Cd, and Co.
Examples of the metal carbonates include iron (II) carbonate, copper (II) carbonate, and silver (I) carbonate.
Examples of the metal phosphates include phosphates of alkali metals, phosphates of alkaline earth metals, phenyl phosphates of alkali metals, and phenyl phosphates of alkaline earth metals.
Examples of the metal halide salts include halide salts of alkali metals and halide salts of alkaline earth metals. Examples of the halide salts of alkali metals include LiF, LiCl, LiBr, NaF, NaCl, NaBr, KF, KCI, KBr, RbF, RbCl, RbBr, CsF, CsCl, and CsBr. Examples of the halide salts of alkaline earth metals include BeF₂, BeCl₂, BeBr₂, CaF₂, CaCl₂, CaBr₂, SrF₂, SrCl₂, and SrBr₂.

Examples of the amidated compounds of metals include alkali metal amides such as LiNH₂ and NaNH₂, and alkaline earth metal amides such as Mg(NH₂)₂, Ba(NH₂)₂, Ca(NH₂)₂, Sr(NH₂)₂, and Be(NH₂)₂.
Examples of the metal alcoholates include methanol salts of alkali metals, ethanol salts of alkali metals, and t-butanol salts of alkali metals.

The catalyst is used in a ratio of preferably from 10⁻⁹ to 10⁻² mole, and more preferably used from 10⁻⁷ to 10⁻³ mole, per one mole of the total of the diol components.

### (Melt-polycondensation)

The melt-polycondensation is a reaction that a diol component containing the compound (1) and a fluorine-containing carbonate are subjected to ester exchange reaction in non-solvent, if necessary, in the presence of a catalyst under heating and under ordinary pressure or reduced pressure, while removing a by-product (fluorine-containing alcohol).
The ester exchange reaction may be conducted in one stage without changing conditions, and may be conducted in two stages or more by changing conditions.

In the case of conducting in one stage, the reaction is conducted under the conditions of temperature: 200 to 260°C (preferably 190 to 250°C), reaction time: 0.5 to 5 hours (preferably 1 to 4 hours), and pressure: ordinary pressure to 1 Torr.
In the case of conducting in two stages or more, specifically, the first stage reaction is conducted under the conditions of temperature: 110 to 200°C (preferably 150 to 190°C), reaction time: 0.1 to 4 hours (preferably 0.5 to 2 hours), and pressure: ordinary pressure to 250 Torr. Subsequently, the temperature is then gradually increased to a final temperature of 220 to 260°C over 1 to 2 hours, the pressure is gradually reduced to a final pressure of 1 Torr or less, and the reaction is continued. Finally, the ester exchange reaction is conducted under the conditions of temperature: 220 to 260°C, and pressure: reduced pressure of 1 Torr or less. When reaching a given viscosity, the pressure is returned by nitrogen, and the reaction is completed. The reaction time in pressure: 1 Torr or less is from 0.1 to 1 hour, and the overall reaction time is from 1 to 5 hours (generally from 2 to 4 hours).

The ester exchange reaction may be conducted in a continuous manner, or may be conducted in a batchwise manner.
Examples of a reaction apparatus used in conducting the ester exchange reaction include vertical types equipped with anchor stirring blade, maxblend stirring blade, helical ribbon stirring blade or the like; horizontal types equipped with paddle blade, lattice blade, spectacle blade or the like; extruder types equipped with screw; and dropping type vertical polycondensation reactors such as falling type polycondensation reactor of wire contact type or falling type polycondensation reactor which does not use wire. The reaction apparatus is preferably used by appropriately combining two kinds or more, taking into consideration a viscosity in the system.

### (Post-treatment)

The catalyst contained in the polycarbonate obtained is preferably removed or deactivated from the standpoint of excellent heat stability and hydrolysis stability.
As the deactivation method, in the case of using a basic catalyst such as an alkali metal compound or an alkaline earth metal compound as the catalyst, a method of neutralizing with an acid substance is preferred.
Examples of the acidic substance include phosphorus-containing acidic compounds such as phosphoric acid, phosphorous acid, hypophosphorous acid, phenylphosphate, phenylphosphine, phenylphosphinic acid, phenylphosphonic acid, diphenylphosphate, diphenylphosphite, diphenylphosphine, diphenylphosphine oxide, diphenylphosphinic acid, monomethyl acid phosphate, monomethyl acid phosphite, dimethyl acid phosphate, dimethyl acid phosphite, monobutyl acid phosphate, monobutyl acid phosphite, dibutyl acid phosphate, dibutyl acid phosphite, monostearic acid phosphate, and distearic acid phosphate; and aromatic sulfonic acid compounds such as p-toluenesulfonic acid, methyl p-toluenesulfonate, ethyl p-toluenesulfonate, propyl p-toluenesulfonate, butyl p-toluenesulfonate, pentyl p-toluenesulfonate, hexyl p-toluenesulfonate, octyl p-toluenesulfonate, phenyl p-toluenesulfonate, phenethyl p-toluenesulfonate, and naphthyl p-toluenesulfonate.

The amount of the acidic substance added is from 1/5 to 20 times, and more preferably from 1/2 to 10 times, the neutralization equivalent to the basic catalyst. When the amount of the acidic substance added is within the range, desired effects can be obtained, and additionally, decrease in heat resistance and mechanical properties of a polycarbonate is suppressed.

Deactivator other than the acidic substance includes aromatic sulfonic acid phosphonium salt.
Examples of the aromatic sulfonic acid phosphonium salt include benzenesulfonic acid tetrabutylphosphonium salt, p-toluenesulfonic acid tetrabutylphosphonium salt, butylbenzenesulfonic acid tetrabutylphosphonium salt, octylbenzenesulfonic acid tetrabutylphosphonium salt, dodecylbenzenesulfonic acid tetrabutylphosphonium salt, dodecylbenzenesulfonic acid tetramethylphosphonium salt, dodecylbenzenesulfonic acid tetraethtylphosphonium salt, and dodecylbenzenesulfonic acid tetrahexylphosphonium salt.

The amount of the aromatic sulfonic acid phosphonium salt added is preferably from 1 to 300 ppm, and more preferably from 10 to 100 ppm, to the polycarbonate. When the amount of the aromatic sulfonic acid phosphonium salt added is within the range, desired effects are obtained, and additionally, decrease in heat resistance and mechanical properties of a polycarbonate is suppressed.

The deactivation of the catalyst is specifically conducted using an apparatus such as a horizontal kneading machine equipped with paddle blade, lattice blade, spectacle blade or the like, or multi-vent type twin-screw extruder, under the conditions of temperature: 150 to 300°C (preferably 200 to 280°C) and pressure: ordinary pressure or less (preferably reduced pressure of 1,333 Pa or less).
In the case of adding the deactivator as a masterbatch, concentrations of a base resin and the deactivator contained in the base resin, and extrusion conditions are selected such that an appropriate amount of the deactivator can uniformly be kneaded, and extrusion is conducted. An aromatic polycarbonate may be used as the base resin, but in the case that an aromatic polycarbonate having melt viscosity higher than that of the polycarbonate obtained by the production method of the present invention is used as the base resin, considering shear heat generation, it is preferred that the amount added is 10 mass% or less (preferably 5 mass% or less) to 100 mass% of the polycarbonate obtained by the production method of the present invention. Furthermore, an aromatic polycarbonate having a mass average molecular weight of 10,000 or more is preferably used so as not to impair excellent hue and heat resistance of the polycarbonate obtained.

The polycarbonate obtained by an ester exchange reaction generally contains an aromatic monohydroxy compound.
Examples of a method for reducing an aromatic monohydroxy compound include a method of extracting with a solvent; and a method of conducting deaeration treatment by a horizontal kneading machine equipped with paddle blade, lattice blade or spectacle blade, a multi-vent type twin-screw extruder, thin film evaporator or the like. The method of extracting with a solvent involves complicated steps, and residual solvent becomes problem. Therefore, deaeration treatment by an extruder in which steps are simple and costs are low is effective.

The polycarbonate produced by melt-polycondensation is introduced in an extruder in a molten state just after the reaction. After deactivating a catalyst, the polycarbonate is preferably subjected to deaeration treatment under reduced pressure of 13,333 Pa or less by at least one vent.
When the catalyst retains in an active state at high temperature over a long period of time, depolymerization occurs, and a low molecular weight compound is formed. Therefore, it is preferred that the period of from introduction of a polycarbonate in an extruder to deactivation of a catalyst by, for example, adding an acidic substance is short as possible.
The number of vents conducting deaeration treatment is 1 or more, and preferably 2 or more.
The pressure in conducting the deaeration treatment is 13,333 Pa or less, and is more preferably 1,333 Pa or less from the standpoint that a low molecular weight compound can efficiently be deaerated. The lower limit of the pressure is 10 Pa from the restriction on apparatus.
In conducting the deaeration treatment, pure water or an appropriate solvent may be injected in a polycarbonate as a deaeration aid.
The temperature of the polycarbonate in the extruder is preferably 250°C or lower, and more preferably 240°C or lower. When the temperature is within the range, a low molecular weight compound is difficult to be formed by thermal decomposition or the like, and coloration is suppressed.
After deactivating the catalyst, the polycarbonate is once cooled, and then can similarly be subjected to deaeration treatment by an extruder without problem.

A method for extracting with a solvent requires solvent recovery and the like, and tends to be complicated. However, the method can greatly reduce the amount of a low molecular weight compound contained in a polycarbonate. A polycarbonate is added to a solvent, followed by stirring at a temperature of from 20 to 100°C for about from 1 to 3 hours to dissolve the polycarbonate, and the polycarbonate is then precipitated by cooling or the like. Thereafter, the polycarbonate is treated with general solid-liquid separation, drying and the like. The amount of the solvent is generally preferably about from 1 to 10 times the polycarbonate.

### (Polycarbonate)

The aromatic monohydroxy compound remained in the polycarbonate obtained by the production method of the present invention is preferably 1,000 ppm or less, more preferably 500 ppm or less, and further preferably 200 ppm or less. Unless otherwise indicated, ppm in the present invention is mass basis. When the residual aromatic monohydroxy compound is within the range, coloration at high temperature and decrease in molecular weight are suppressed. Furthermore, coloration, silver streak, foaming, mold contamination, and the like at molding or the like can be suppressed, and a good quality molded article can be obtained.

The polycarbonate obtained by production method of the present invention has a mass average molecular weight in terms of polystyrene of preferably from 20,000 to 200,000, and more preferably from 35,000 to 100,000. When the mass average molecular weight in terms of polystyrene is 20,000 or more, mechanical properties become good, and when the mass average molecular weight is 200,000 or less, fluidity becomes good, and molding conditions do not become severe.

The glass transition temperature of the polycarbonate obtained by the production method of the present invention is preferably from 95 to 165°C, and more preferably from 105 to 165°C. When the glass transition temperature is 95°C or higher, heat resistance becomes good, and applicable use environment is expanded. When the glass transition temperature is 165°C or lower, fluidity becomes good, and molding conditions do not become severe. Furthermore, the polycarbonate is not required to reduce its molecular weight to secure fluidity, and does not become brittle.

If necessary, various conventional additives may be added to the polycarbonate obtained by the production method of the present invention in a range that its properties are not impaired.
Examples of the additives include antioxidants, ultraviolet absorbers, release agents, flame retardants, antistatic agents, pigments, and dyes. The additives may be used in one kind alone or may be used by combining two kinds or more.

Examples of the antioxidants include phosphite compounds such as triphenylphosphite, tris(4-methylphenyl)phosphite, tris(4-t-butylphenyl)phosphite, tris(monononylphenyl)phosphite, tris(2-methyl-4-ethylphenyl)phosphite, tris(2-methyl-4-t-butylphenyl)phosphite, tris(2,4-di-t-butylphenyl)phosphite, tris(2,6-di-t-butylphenyl) phosphite, tris(2,4-di-t-butyl-5-methylphenyl)phosphite, tris(mono, dinonylphenyl)phosphite, bis-(monononylphenyl)pentaerythritol-di-phosphite, bis-(2,4-dit-butylphenyl)pentaerythritol-di-phosphite, bis-(2,6-di-t-butyl-4-methylphenyl)pentaerythritol-di-phosphite, bis-(2,4,6-tri-t-butylphenyl)pentaerythritol-diphosphite, bis-(2,4-di-t-butyl-5-methylphenyl)pentaerythritol-di-phosphite, 2,2-methylenebis-(4,6-dimethylphenyl)octylphosphite, 2,2-methylenebis-(4-t-butyl-6-methylphenyl)octylphosphite, 2,2-methylenebis-(4,6-di-t-butylphenyl)octylphosphite, 2,2-methylenebis-(4,6-dimethylphenyl)hexylphosphite, 2,2-methylenebis-(4,6-di-t-butylphenyl)hexylphosphite, and 2,2-methylenebis(4,6-di-t-butylphenyl)stearylphosphite; hindered phenol compounds such as pentaerythrityl-tetrakis[3-(3,5-di-t-butyl-4-hydroxyphenyl)propionate], 1,6-hexanediol-bis-[3-(3,5-di-t-butyl-4-hydroxyphenyl)propionate], octadecyl-3-(3,5-di-t-butyl-4-hydroxyphenyl)propionate, 1,3,5-trimethyl-2,4,6-tris(3,5-di-t-butyl-4-hydroxybenzyl)benzene, triethyleneglycol-bis-[3-(3-t-butyl-5-methyl-4-hyeroxyphenyl)propionate], 3,9-bis-{2-[3-(3-t-butyl-4-hydroxy-5-methylphenyl)propionyloxy]-1,1-dimethylethyl}-2,4,8,10-tetraoxaspiro[5,5]undecane, and 1,1,3-tris[2-methyl-4-(3,5-di-t-butyl-4- hydroxyphenylpropionyloxy)-5-t-butylphenyl]butane; and 5,7-di-t-butyl-3-(3,4-dimethylphneyl)-3H-benzofuran-2-one. The antioxidants may be used in one kind alone or may be used in combination of two kinds or more.

The amount of the antioxidants added is preferably from 0.005 to 0.1 mass%, more preferably from 0.01 to 0.08 mass%, and further preferably from 0.01 to 0.05 mass%, to 100 mass% of the polycarbonate. When the amount of the antioxidants added is within the range, desired effects are obtained, and additionally, decrease in heat resistance and mechanical properties is suppressed.

Examples of the ultraviolet absorbers include 2-(5-methyl-2-hydroxyphenyl)benzotriazole, 2-[2-hydroxy-3,5-bis(α,α-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole, 2,2'-methylenebis-[4-(1,1,3,3-tetramethylbutyl)-6-[(2H-benzotriazol-2-yl)phenol]], 2-(4,6-diphenyl-1,3,5-triazin-2-yl)-5-[(hexyl)oxy]-phenol, 2,4-dihydroxobenzophenone, 2-hydroxy-4-n-octyloxybenzophenone, and 2-hydroxy-4-methoxy-2'-carboxybenzophenone. The ultraviolet absorbers may be used in one kind alone or may be used in combination of two kinds or more.

The amount of the ultraviolet absorbers added is preferably from 0.005 to 1.0 mass%, more preferably from 0.01 to 0.5 mass%, and further preferably from 0.01 to 0.05 mass%, to 100 mass% of the polycarbonate. When the amount of the ultraviolet absorbers added is within the range, desired effects are obtained, and additionally, decrease in heat resistance and mechanical properties is suppressed.

Examples of the release agents include fatty acid esters such as natural paraffins, synthetic paraffins, silicone oils, polyethylene waxes, beeswax, stearic acid, stearic acid monoglyceride, stearyl stearate, palmitic acid monoglyceride, behenyl behenate, pentaerythritol distearate, and pentaerythritol tetrastearate. The release agents may be used in one kind alone or may be used in combination of two kinds or more.

The amount of the release agents added is preferably from 0.005 to 0.5 mass%, more preferably from 0.01 to 0.1 mass%, and further preferably from 0.01 to 0.05 mass%, to 100 mass% of the polycarbonate. When the amount of the release agents added is within the range, desired effects are obtained, and additionally, decrease in heat resistance and mechanical properties is suppressed.

The method for adding the additives include a method of adding while the polycarbonate is in a molten state after completion of the reaction; and a method of once cooling the polycarbonate after completion of the reaction, palletizing, and then again melting and mixing. The method of adding while the polycarbonate is in a molten state after completion of the reaction is preferred from the standpoint that thermal history can be reduced.

The polycarbonate and the additives may be mixed in a reaction apparatus used in melt-polycondensation, and may be kneaded using a single-screw or twin-screw extruder.
The additives may be added directly without diluting, may be added after diluting with a soluble solvent, or may be added in a form of a masterbatch.
The additives may be added simultaneously with a deactivator, but is preferably added after adding the deactivator.
In the case of conducting the deaeration treatment using an extruder, the additives may be added simultaneously with a deaeration aid. However, depending on additives, the additives may be removed by hydrolysis or together with the deaeration aid. Therefore, the additives are preferably added after the deaeration treatment. In the case of using additives having relatively low heat resistance, it is effective to add at the end part of the extruder as possible from the standpoint of reducing thermal history at high temperature.

The polycarbonate obtained by the production method of the present invention may be blended with an aromatic polycarbonate.
A method for kneading the polycarbonate obtained by the production method of the present invention and an aromatic polycarbonate includes a method of introducing polycarbonate pellets after deactivating a catalyst and aromatic polycarbonate pellets in an extruder, and kneading; and a method of introducing a polycarbonate in a molten state just after completion of the reaction in an extruder, deactivating a catalyst, and then adding an aromatic polycarbonate, followed by kneading. The latter is preferred from the standpoint of suppressing shear heat generation. In particular, in the case of adding an aromatic polycarbonate having melt viscosity higher than that of the polycarbonate obtained by the production method of the present invention, temperature of the polycarbonate is increased due to shear heat generation. Therefore, in order to suppress decrease in molecular weight due to thermal decomposition, formation of a low molecular weight compound, and coloration, it is preferred to add the aromatic polycarbonate to a polycarbonate in which a catalyst has sufficiently be deactivated.

In the method for producing a polycarbonate of the present invention as described above, because the diol component containing the compound (1) and the fluorine-containing carbonate are subjected to melt-polycondensation, an alcohol extracted from the system with the progress of an ester exchange reaction becomes a fluorine-containing alcohol having low boiling point. Therefore, the polycondensation temperature can be set to low temperature, and as a result, a polycarbonate having excellent hue and high refractive index can be produced at low temperature with a simple process.

### EXAMPLES

The present invention is specifically described below with reference to Examples, but it should be understood that the invention is not construed as being limited to the Examples.
The polycarbonate obtained was evaluated by the following methods.

### (Molecular weight)

Using the following apparatus, a mass average molecular weight and a number average molecular weight in terms of polystyrene were measured under the following conditions.
GPC apparatus: HLC-8220GPC, manufactured by Tosoh Corporation
Detector: RI detection
Column: TSK GUARD COLUMN SUPER HZ Series column (HZ-L Guard Column, 4000, 3000, 2500, and 2000)
Developing solvent: tetrahydrofuran
Flow rate: 0.35 mL/min
Column temperature: 40°C

### (Solution hue (YI value))

8.0 g of a sample was dissolved in 80 mL of methylene chloride, and YI value (Yellow Index) was measured using 1.0 cm quartz glass cell. Spectrocolor meter, SE-2000, manufactured by Nippon Denshoku Industries Co., Ltd. was used as a color-difference meter.

### (Synthesis Example 1)

### Synthesis of bis-(2,2,3,3-tetrafluoropropyl)carbonate:

Into a 500 mL glass reactor equipped with stirrer, a 20°C reflux condenser and a distillation line, 201 g (0.76 mol) of hexachloroacetone, 358 g (2.71 mol) of 2,2,3,3-tetrafluoropropanol and 10 g of KF were charged. While stirring, the temperature was gradually increased, and the reaction was conducted at an inner temperature of 100°C for 20 hours. After completion of the reaction, 560 g of a reaction crude liquid present in the reactor was recovered. As a result of GC analysis of the recovered liquid, it was confirmed that a compound (12) was formed. After purification by distillation, the compound (12) was used in a polymerization reaction.

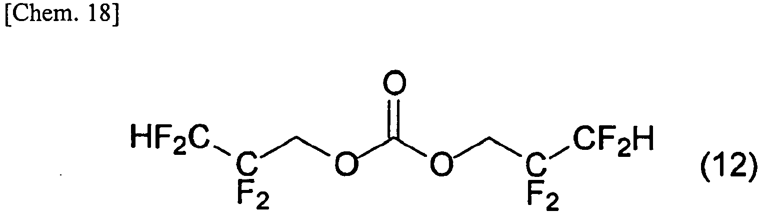

### (Example 1)

Into a 300 mL reactor of an apparatus for melt-polycondensation, 87.7 g (0.2 mol) of 9,9-bis-(4-(2-hydroxyethoxy)phenyl)fluorene (compound (13)), 63.8 g (0.22 mol) of the compound (12), and 0.104 g (0.2 mmol) of tridodecylamine were charged under nitrogen gas atmosphere. The following deoxygeneration step was repeated three times.
Deoxygeneration step: Oxygen is extracted by evacuating until the inside of a reactor reaches about 1 Torr at 0°C, and nitrogen is then charged in the reactor.

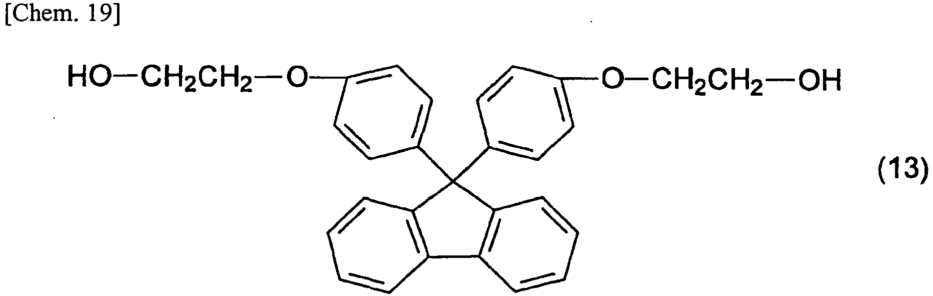

The reactor was dipped in an oil bath pre-heated to 180°C. Stirring was conducted under an oil bath temperature of 180°C and a stirring rate of 200 rpm. As a result, the system was thermally counterbalanced 10 minutes later, raw materials were completely fused, and colorless homogeneous liquid was obtained. At the time that the reaction was continued for 5 minutes while maintaining the pressure in the reactor at 740 Torr and the temperature in the reactor at 180°C, 2,2,3,3-tetrafluoropropanol was exhausted from the reaction vessel and began to distill in a receiver flask. Thirty minutes later, the temperature in the reactor was increased to 200°C, and the pressure in the reactor was maintained at 740 Torr. Thirty minutes later, while maintaining the temperature in the reactor at 200°C, the pressure in the reactor was decreased to 500 Torr, and the system was maintained for 30 minutes. 2,2,3,3-Tetrafluoropropanol continued to distill in the receiver flask. The temperature in the reactor was increased to 250°C, the pressure in the reactor was decreased to 100 Torr, and this condition was maintained for 30 minutes. Thereafter, the temperature in the reactor was increased to 260°C, and the pressure in the reactor was decreased to 1 Torr. As a result, a viscosity of a molten material began to increase. After maintaining for 30 minutes, the pressure was returned to ordinary pressure by nitrogen, and the melt-polycondensation reaction was completed by cooling at room temperature.

Mass average molecular weight (Mw) by GPC analysis of the polycarbonate obtained was 40,000, number average molecular weight (Mn) was 29,000, and the degree of dispersion (Mw/Mn) was 1.38. Liquid hue (YI value) of the polycarbonate was 0.90, and it was recognized to be a polycarbonate having high transparency. The results are shown in Table 1.

### (Comparative Example 1)

Into a 300 mL reactor of an apparatus for melt-polycondensation, 45.62 g (0.2 mol) of bisphenol A (compound (14)), 63.8 g (0.22 mol) of the compound (12), and 0.104 g (0.2 mmol) of tridodecylamine were charged under nitrogen gas atmosphere. The following deoxygeneration step was repeated three times.
Deoxygeneration step: Oxygen is extracted by evacuating until the inside of a reactor reaches about 1 Torr at 0°C, and nitrogen is then charged in the reactor.

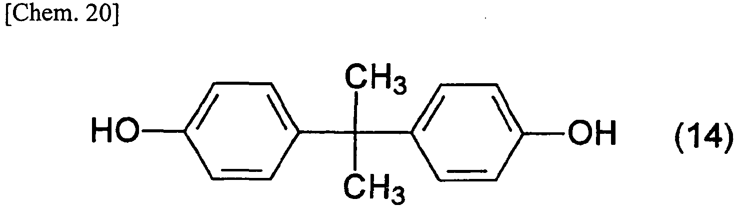

The reactor was dipped in an oil bath pre-heated to 180°C. Stirring was conducted under an oil bath temperature of 180°C and a stirring rate of 200 rpm. As a result, the system was thermally counterbalanced 10 minutes later, raw materials were completely fused, and colorless homogeneous liquid was obtained. At the time that the reaction was continued for 5 minutes while maintaining the pressure in the reactor at 740 Torr and the temperature in the reactor at 180°C, 2,2,3,3-tetrafluoropropanol was exhausted from the reaction vessel and began to distill in a receiver flask. Thirty minutes later, the temperature in the reactor was increased to 200°C, and the pressure in the reactor was maintained at 740 Torr. Thirty minutes later, while maintaining the temperature in the reactor at 200°C, the pressure in the reactor was decreased to 500 Torr, and the system was maintained for 30 minutes. 2,2,3,3-Tetrafluoropropanol continued to distill in the receiver flask. The temperature in the reactor was increased to 250°C, the pressure in the reactor was decreased to 100 Torr, and this condition was maintained for 30 minutes. Thereafter, the temperature in the reactor was increased to 260°C, and the pressure in the reactor was decreased to 1 Torr. As a result, a viscosity of a molten material began to increase. After maintaining for 30 minutes, the pressure was returned to ordinary pressure by nitrogen, and the melt-polycondensation reaction was completed by cooling at room temperature.

Mass average molecular weight (Mw) by GPC analysis of the polycarbonate obtained was 45,000, number average molecular weight (Mn) was 31,000, and the degree of dispersion (Mw/Mn) was 1.45. Liquid hue (YI value) of the polycarbonate was 3.02, and the transparency was poor as compared with the polycarbonate of Example 1. The results are shown in Table 1.

**[Table 1]**

| | Mw | Mn | Mw/Mn | YI value |
|---|---|---|---|---|
| Example 1 | 40,000 | 29,000 | 1.38 | 0.90 |
| Comparative Example 1 | 45,000 | 31,000 | 1.45 | 3.02 |

While the present invention has been described in detail and by reference to the specific embodiments thereof, it is apparent to one skilled in the art that various modifications or changes can be made without departing the spirit and scope of the present invention.
This application is based on Japanese Patent Application No. 2009-261722 filed on November 17, 2009, the contents of which is incorporated herein by reference.

### INDUSTRIAL APPLICABILITY

The polycarbonate obtained by the production method of the present invention has high transparency and high refractive index, and has excellent hue and heat resistance. For this reason, the polycarbonate is useful as optical materials of various optical lenses such as camera lens, projector lens and pickup lens; various optical devices such as prism, optical disk substrate, optical fiber, optical film and optical filter; and their members.

## Claims

1. A method for producing a polycarbonate, comprising melt-polycondensing a diol component containing a compound represented by the following formula (1) with a fluorine-containing carbonate: 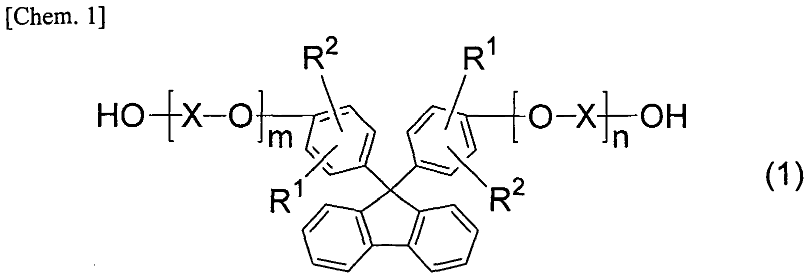 wherein R¹ and R² are each independently hydrogen atom, C₁₋₁₀ alkyl group, C₆₋₁₀ cycloalkyl group, or C₆₋₁₀ aryl group, and two of R¹'s and two of R²'s may mutually be the same or different;
X is C₁₋₆ alkylene group, C₆₋₁₀ cycloalkylene group, or C₆₋₁₀ arylene group, and a plurality of X's may be the same or different; and
m and n are each independently an integer of from 1 to 5.

2. The method for producing a polycarbonate according to claim 1, wherein the fluorine-containing carbonate contains at least one fluorine-containing carbonate selected from the group consisting of a compound represented by the following formula (4), a compound represented by the following formula (5), a compound represented by the following formula (6), a compound represented by the following formula (7), and a compound represented by the following formula (8): 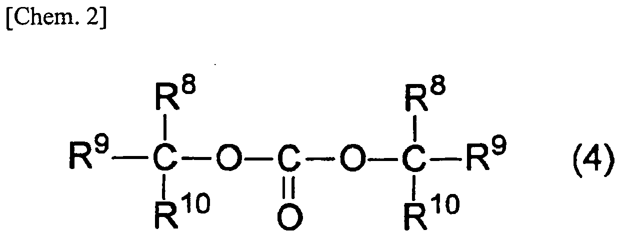 wherein R⁸ is fluorine atom or a group represented by CA¹B¹R¹¹, and two of R⁸'s may be the same or different;
R⁹ is hydrogen atom, fluorine atom or a group represented by CA²B²R¹², and two of R⁹'s may be the same or different;
R¹⁰ is hydrogen atom, fluorine atom or a group represented by CA³B³R¹³, and two of R¹⁰'s may be the same or different;
A¹ to A³ are each independently hydrogen atom, fluorine atom or R^{f}, and in the case that plural A¹'s to A³'s are present, respectively, the respective A¹'s to A³'s may be the same or different;
B¹ to B³ are each independently hydrogen atom, fluorine atom or R^{f}, and in the case that plural B¹'s to B³'s are present, respectively, the respective B¹'s to B³'s may be the same or different;
R¹¹ is fluorine atom, R^{f} or OR^{f};
R¹² and R¹³ are each independently hydrogen atom, fluorine atom, R^{f}, OR^{f}, or C₁₋₆ alkyl group (which may contain etheric oxygen); and
R^{f} is C₁₋₄ fluoroalkyl group (which may contain etheric oxygen) or C₆₋₁₀ fluoroarylene group (which may contain etheric oxygen), and in the case that plural R^{f}'s are present, the plural R^{f}'s may be mutually the same or different: 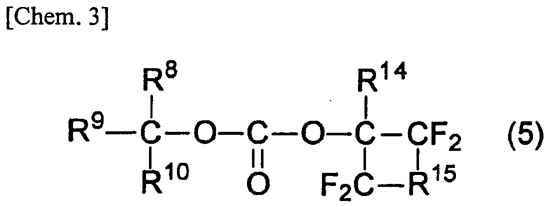 wherein R⁸ is fluorine atom or a group represented by CA¹B¹R¹¹;
R⁹ is hydrogen atom, fluorine atom or a group represented by CA²B²R¹²;
R¹⁰ is hydrogen atom, fluorine atom or a group represented by CA³B³R¹³;
R¹⁴ is hydrogen atom or fluorine atom;
R¹⁵ is C₁₋₅ perfluoroalkylene group (which may contain etheric oxygen);
A¹ to A³ are each independently hydrogen atom, fluorine atom or Rf;
B¹ to B³ are each independently hydrogen atom, fluorine atom or Rf;
R¹¹ is fluorine atom, R^{f} or OR^{f};
R¹² and R¹³ are each independently hydrogen atom, fluorine atom, R^{f}, OR^{f} or C₁₋₆ alkyl group (which may contain etheric oxygen); and
R^{f} is C₁₋₄ fluoroalkyl group (which may contain etheric oxygen) or C₆₋₁₀ fluoroarylene group (which may contain etheric oxygen), and in the case that plural R^{f}'s are present, the plural R^{f}'s may mutually be the same or different: 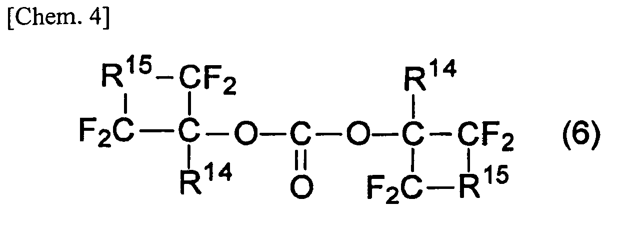 wherein R¹⁴ is hydrogen atom or fluorine atom, and two of R¹⁴'s may be the same or different;
R¹⁵ is C₁₋₅ perfluoroalkylene group (which may contain etheric oxygen), and two of R¹⁵'s may be the same or different: 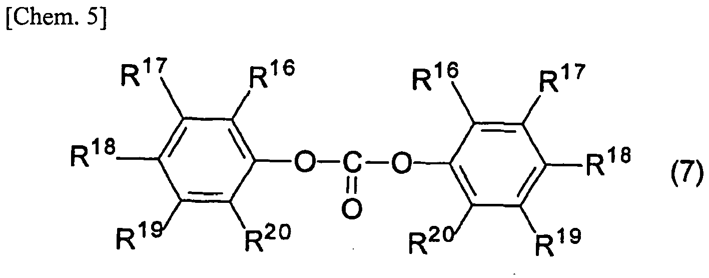 wherein R¹⁶ to R²⁰ are each independently hydrogen atom, fluorine atom, C₁₋₆ alkyl group (which may contain etheric oxygen), or C₁₋₆ fluoroalkyl group (which may contain etheric oxygen), and two of R¹⁶'s, two of R¹⁷'s, two of R¹⁸'s, two of R¹⁹'s, and two of R²⁰'s may mutually be the same or different;
in each benzene ring, at least one of R¹⁶ to R²⁰ has fluorine atom; and
the alkyl group and the fluoroalkyl group may be a linear structure or may be a branched structure: 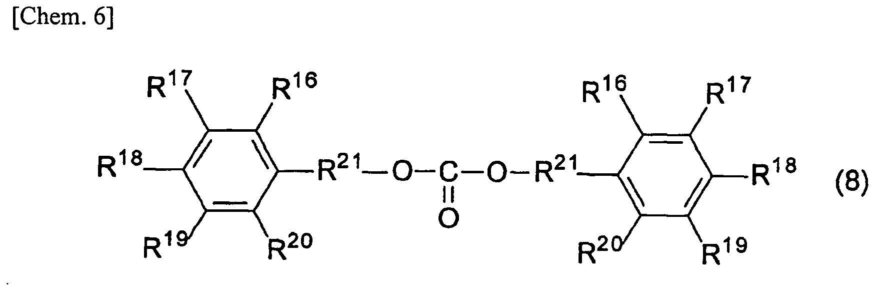 wherein R¹⁶ to R²⁰ are each independently hydrogen atom, fluorine atom, C₁₋₆ alkyl group (which may contain etheric oxygen), or C₁₋₆ fluoroalkyl group (which may contain etheric oxygen), and two of R¹⁶'s, two of R¹⁷'s, two of R¹⁸'s, two of R¹⁹'s, and two of R²⁰'s may mutually be the same or different;
R²¹ is C₁₋₆ alkylene group (which may contain etheric oxygen) or C₁₋₆ fluoroalkylene group (which may contain etheric oxygen), and two of R²¹'s may be the same or different; and
the compound has at least one fluorine atom in the molecule.

3. The method for producing a polycarbonate according to claim 1 or 2, comprising melt-polycondensing the diol component with the fluorine-containing carbonate in the presence of a catalyst.

4. The method for producing a polycarbonate according to claim 3, wherein the catalyst is a basic catalyst or an ion exchange resin having a structure of the basic catalyst.

5. The method for producing a polycarbonate according to claim 3, wherein the catalyst contains at least one selected from the group consisting of a simple substance of metal, a metal oxide, a metal hydroxide, a metal hydride, a metal acetate, a metal carbonate, a metal phosphate, a metal halide, an amidated compound of metal, a metal alcoholate, and a metal phenolate.

6. The method for producing a polycarbonate according to claim 2, wherein the fluorine-containing carbonate is obtained by a reaction that uses at least one fluorine-containing alcohol selected from the group consisting of a compound represented by the following formula (9) and a compound represented by the following formula (10), as a starting material: 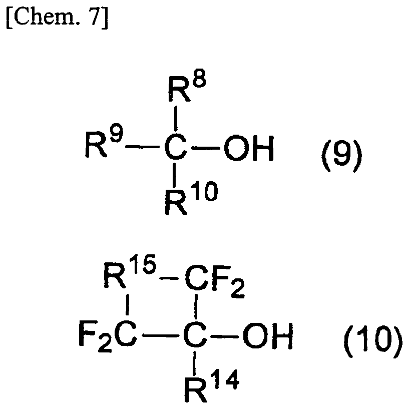 wherein R⁸ is fluorine atom or a group represented by CA¹B¹R¹¹;
R⁹ is hydrogen atom, fluorine atom or a group represented by CA²B²R¹²;
R¹⁰ is hydrogen atom, fluorine atom or a group represented by CA³B³R¹³;
R¹⁴ is hydrogen atom or fluorine atom;
R¹⁵ is C₁₋₅ perfluoroalkylene group (which may contain etheric oxygen);
A¹ to A³ are each independently hydrogen atom, fluorine atom or R^{f};
B¹ to B³ are each independently hydrogen atom, fluorine atom or R^{f};
R¹¹ is fluorine atom, R^{f} or OR^{f};
R¹² and R¹³ are each independently hydrogen atom, fluorine atom, R^{f}, OR^{f} or C₁₋₆ alkyl group (which may contain etheric oxygen); and
R^{f} is C₁₋₄ fluoroalkyl group (which may contain etheric oxygen) or C₆₋₁₀ fluoroarylene group (which may contain etheric oxygen), and in the case that plural R^{f}'s are present in one molecule, the plural R^{f}'s may mutually be the same or different.

7. The method for producing a polycarbonate according to claim 6, wherein the carbon number of the fluorine-containing alcohol is from 2 to 10.

8. The method for producing a polycarbonate according to claim 6 or 7, wherein the pKa of the fluorine-containing alcohol is less than 15.

9. The method for producing a polycarbonate according to claim 6 or 7, wherein the pKa of the fluorine-containing alcohol is less than 10.

10. The method for producing a polycarbonate according to any one of claims 6 to 9, wherein the fluorine-containing alcohol contains at least one selected from the group consisting of 2,2,3,3-tetrafluoropropanol, 1,1,1,3,3,3-hexafluoro-2- propanol, perfluoro(t-butyl)alcohol, and 2,2,3,3,4,4,5,5,6,6-decafluorocyclohexanol.
